# EUROPEAN PATENT APPLICATION

(11) **EP 1 669 834 A1**
(43) Date of publication of application: **14.06.2006**
(21) Application number: 04788391.3
(22) Date of filing: 30.09.2004
(51) Int. Cl.: G06F 1/00, H04N 5/44, G06F 12/14, G06F 15/00

(54) **SECURITY SYSTEM FOR ELECTRONIC DEVICE**

(30) Priority: 02.10.2003 JP 2003344127
(71) Applicant: MATSUSHITA ELECTRIC INDUSTRIAL CO., LTD., Kadoma-shi, Osaka 571-8501 (JP)
(72) Inventor: SASABE, Toru, c/o Matsushita Elect.Ind. Co., Ltd., Chuo-ku, Osaka-shi, Osaka 540-6319 (JP)
(74) Representative: Eisenführ, Speiser & Partner
(86) International application number: PCT/JP2004/014363
(87) International publication number: WO 2005/033915

(57) **Abstract**

An antitheft system is provided for an electronic apparatus including a television receiver (201) and a DVD recorder (205) connected via an apparatus control line (209). The DVD recorder (205) includes a non-volatile memory (207) for previously storing a password. The television receiver (201) includes a non-volatile memory (203) for previously storing the password and a controller (202). The controller (202) requests the DVD recorder (205) to transmit the password stored in the non-volatile memory (207) when the television receiver (201) is activated or started up, and receives the password from the DVD recorder (205). The controller (202) further compares the received password with the password stored in the non-volatile memory (203), and starts an operation of the television receiver (201) when the passwords coincide with each other.

## Description

### TECHNICAL FIELD

The present invention relates to a security system for use in a plurality of electronic apparatuses, such as a television receiver and a DVD recorder communicating with each other, and relates to the electronic apparatuses.

### RELATED PRIOR ART

As a prior art for preventing an electronic apparatus from being stolen, for example, the following antitheft apparatus is disclosed in Patent document 1. For example, in order to prevent theft of an audio equipment, a password is previously set and memorized in a non-volatile memory. A user is requested to input the password next time when a power supply is turned on. The power supply is turned on as usual when the inputted password coincides with the password memorized in the non-volatile memory. The audio equipment is not operated when the passwords are different from each other. In the foregoing apparatus, a method of reading the password has been improved so as to enhance the security.

Fig. 2 shows an antitheft apparatus disclosed in the Patent document 1 according to the prior art. In Fig. 2, the antitheft apparatus includes a microprocessor 101 for controlling operation of an audio equipment 103, a non-volatile memory 102 for storing information of a predetermined system, and the audio equipment 103.

The microprocessor 101 provides a user with a setting menu for previously setting the password at the time of turning on the power supply, on a screen. The microprocessor 101 then memorizes and registers the password inputted by the user in the setting menu in the non-volatile memory 102. When the user turns on the power supply of the audio equipment 103 after the registration of the password, the microprocessor 101 displays a password input screen before operating the audio equipment 103, and asks the user to input the password. The microprocessor 101 operates the audio equipment 103 as usual when the inputted password coincides with the password memorized in the non-volatile memory 102. On the other hand, when the passwords are different from each other, the microprocessor 101 stops the operation of the audio equipment 103 in order to prevent theft of the apparatus. The antitheft apparatus is provided with an additional device so that the password memorized in the non-volatile memory 102 is not easily read out.

Patent document 1 is Japanese patent laid-open publication No. H02-042823.

### DISCLOSURE OF THE INVENTION

### PROBLEMS TO BE SOLVED BY THE INVENTION

However, the antitheft apparatus according to the prior art requires a user to input the password every time when the user turns on the power supply of the audio equipment 103. This leads to that the antitheft apparatus forces the user into a bothersome operation. Further, the apparatus has a problem that only a person who registered the password could operate the audio equipment 103.

Therefore, an essential object of the present invention is to solve the aforementioned problems, and to provide a security system for use in an electronic apparatus and the electronic apparatus capable of enhancing security in order to prevent theft and the like without requiring the user to input the password every time when a power supply of the electronic apparatus is turned on.

According to the first aspect of the present invention, there is provided a security system for use in a plurality of electronic apparatuses including a first electronic apparatus and a second electronic apparatus connected to each other via an apparatus control line. The second electronic apparatus comprises second storage means. The second storage means previously stores a password. The first electronic apparatus comprises first storage means and control means. The first storage means previously stores the password. The control means requests the second electronic apparatus to transmit the password stored in the second storage means at activation of the first electronic apparatus, receives the password from the second electronic apparatus, compares the received password with the password stored in the first storage means, and executes a security function so as to start an operation of the first electronic apparatus when the passwords coincide with each other.

In the above-mentioned security system, the control means compares the received password with the password stored in the first storage means, and executes the security function so as to stop the operation of the first electronic apparatus when the passwords do not coincide with each other.

In addition, in the above-mentioned security system, the first electronic apparatus further comprises display means and input means. The display means displays a message to a user. The input means inputs the password. The control means compares the received password with the password stored in the first storage means, displays a request of inputting the password to a user on the display means when the passwords do not coincide with each other, compares the password inputted by the user using the input means with the password stored in the first storage means, and starts the operation of the first electronic apparatus when the passwords coincide with each other.

Further, in the above-mentioned security system, the control means compares the password inputted by the user with the password stored in the first storage means, and stops the operation of the first electronic apparatus when the passwords do not coincide with each other.

Still further, in the above-mentioned security system, the control means compares the password inputted by the user a predetermined number of times of more than two with the password stored in the first storage means, and stops the operation of the first electronic apparatus when the passwords do not coincide with each other.

In addition, in the above-mentioned security system, the first electronic apparatus further comprises third storage means. The third storage means previously stores a special password other than the password. The control means compares the inputted password with the special password stored in the third storage means, and starts the operation of the first electronic apparatus when the passwords coincide with each other.

Further, in the above-mentioned security system, the first electronic apparatus further comprises first detecting means and second detecting means. The first detecting means detects whether or not the second electronic apparatus is connected to the first electronic apparatus via the apparatus control line. The second detecting means detects whether or not the second electronic apparatus has the security function using a control signal of the apparatus control line when the first detecting means detects that the second electronic apparatus is connected to the first electronic apparatus. The control means executes the processings of the first detecting means and the second detecting means during operation of the first electronic apparatus.

Still further, in the above-mentioned security system, the control means stops the processing of the security function, and starts an ordinary operation of the first electronic apparatus when the first detecting means detects that the second electronic apparatus is not connected to the first electronic apparatus.

In addition, in the above-mentioned security system, the control means stops the processing of the security function, and starts the ordinary operation of the first electronic apparatus when the second detecting means detects that the second electronic apparatus does not have the security function.

According to the second aspect of the present invention, there is provided a first electronic apparatus provided in a security system for use in a plurality of electronic apparatuses including a first electronic apparatus and a second electronic apparatus connected to each other via an apparatus control line. The second electronic apparatus comprises second storage means. The second storage means previously stores a password. The first electronic apparatus comprises first storage means and control means. The first storage means previously stores the password. The control means requests the second electronic apparatus to transmit the password stored in the second storage means, receives the password from the second electronic apparatus when the first electronic apparatus is activated or started up, compares the received password with the password stored in the first storage means, and executes a security function so as to start an operation of the first electronic apparatus when the passwords coincide with each other.

In the above-mentioned electronic apparatus for a security system, the control means compares the received password with the password stored in the first storage means, and executes the security function so as to stop the operation of the first electronic apparatus when the passwords do not coincide with each other.

In addition, in the above-mentioned electronic apparatus for a security system, the first electronic apparatus further comprises display means and input means. The display means displays a message to a user. The input means inputs the password. The control means compares the received password with the password stored in the first storage means, displays a request of inputting the password to a user on the display means when the passwords do not coincide with each other, compares the password inputted by the user using the input means with the password stored in the first storage means, and starts the operation of the first electronic apparatus when the passwords coincide with each other.

Further, in the above-mentioned electronic apparatus for a security system, the control means compares the password inputted by the user with the password stored in the first storage means, and stops the operation of the first electronic apparatus when the passwords do not coincide with each other.

Still further, in the above-mentioned electronic apparatus for a security system, the control means compares the password inputted by the user a predetermined number of times of more than two with the password stored in the first storage means, and stops the operation of the first electronic apparatus when the passwords do not coincide with each other.

In addition, in the above-mentioned electronic apparatus for a security system, the first electronic apparatus further comprises third storage means. The third storage means previously stores a special password other than the password. The control means compares the inputted password with the special password stored in the third storage means, and starts the operation of the first electronic apparatus when the passwords coincide with each other.

Further, in the above-mentioned electronic apparatus for a security system, the first electronic apparatus further comprises first detecting means and second detecting means. The first detecting means detects whether or not the second electronic apparatus is connected to the first electronic apparatus via the apparatus control line. The second detecting means detects whether or not the second electronic apparatus has the security function using a control signal of the apparatus control line when the first detecting means detects that the second electronic apparatus is connected to the first electronic apparatus. The control means executes the processings of the first detecting means and the second detecting means during activation of the first electronic apparatus.

Still further, in the above-mentioned electronic apparatus for a security system, the control means stops the processing of the security function, and starts an ordinary operation of the first electronic apparatus when the first detecting means detects that the second electronic apparatus is not connected to the first electronic apparatus.

In addition, in the above-mentioned electronic apparatus for a security system, the control means stops the processing of the security function, and starts the ordinary operation of the first electronic apparatus when the second detecting means detects that the second electronic apparatus does not have the security function.

### EFFECT OF THE INVENTION

Therefore, according to the security system for use in the electronic apparatus of the present invention, the password is registered in the storage means of the electronic apparatus used as the connected auxiliary apparatus in the security system for use in the plurality of electronic apparatuses connected via an apparatus control line so that the password can be confirmed when the electronic apparatus used as the main apparatus is activated or started up. As far as the apparatus control line is connected, when the passwords coincide with each other between the electronic apparatus used as the main apparatus and the electronic apparatus used as the auxiliary apparatus, the user can activate the electronic apparatus in a manner similar to that of the processing usually executed when the power supply is turned on. The electronic apparatus used as the main apparatus cannot be activated or started up when the electronic apparatus used as the auxiliary apparatus is not connected. As a result, even if the electronic apparatus used as the main apparatus is stolen, it is not possible to activate the same. Accordingly, the theft can be prevented without forcing the user into such a bothersome operation as the input of the password. Further, the system according to the present invention can be effectively realized without almost increasing the cost.

### BRIEF DESCRIPTION OF DRAWINGS

Fig. 1 is a block diagram illustrating a configuration of a security system including a television receiver 201 and a DVD recorder 205 according to a preferred embodiment of the present invention.
Fig. 2 is a block diagram illustrating a configuration of an antitheft apparatus according to a prior art.
Fig. 3 is a sequence diagram illustrating a communication procedure P1 between a controller 202 and a controller 206 of Fig. 1.
Fig. 4 is a sequence diagram illustrating a communication procedure P2 between the controller 202 and the controller 206 of Fig. 1.
Fig. 5 is a sequence diagram illustrating a communication procedure P3 between the controller 202 and the controller 206 of Fig. 1.
Fig. 6 is a sequence diagram illustrating a communication procedure P4 between the controller 202 and the controller 206 of Fig. 1.
Fig. 7 is a flow chart illustrating a first processing executed by the controller 202 of Fig. 1 when a power supply is turned on after shipment.
Fig. 8 is a flow chart illustrating a security function confirmation processing (Step S9) which is a subroutine of Fig. 7.
Fig. 9 is a flow chart illustrating a first part of an apparatus control processing executed by the controller 202 of Fig. 1.
Fig. 10 is a flow chart illustrating a second part of the apparatus control processing executed by the controller 202 of Fig. 1.
Fig. 11 is a flow chart illustrating a third part of the apparatus control processing executed by the controller 202 of Fig. 1
Fig. 12 is a flow chart illustrating a first part of a processing executed when an owner ID is re-registered (Step S28) which is a subroutine of Fig. 9.
Fig. 13 is a flow chart illustrating a second part of the processing executed when the owner ID is re-registered (Step S28) which is the subroutine of Fig. 9.
Fig. 14 is a flow chart illustrating a third part of the processing executed when the owner ID is re-registered (Step S28) which is the subroutine of Fig. 9.
Fig. 15 is a flow chart illustrating a modified example of the processing of Fig. 10.
Fig. 16 is a flow chart illustrating a modified example of the processing of Fig. 11.
Fig. 17 is a flow chart illustrating a modified example of the processing of Fig. 12.
Fig. 18 is a front view illustrating a screen D1 for an automatic set-up at start, which is displayed in a processing of Step S1 of Fig. 7.
Fig. 19 is a front view illustrating a screen D2 for registration when the power supply is initially turned on, which is displayed in a processing of Step S2 of Fig. 7.
Fig. 20 is a front view illustrating a screen D3 for (first) confirmation of use of a security option, which is displayed in a processing of Step S8 of Fig. 7.
Fig. 21 is a front view illustrating a screen D4 for (second) confirmation of use of a security option, which is displayed in a processing of Step S 14 of Fig. 7.
Fig. 22 is a front view illustrating a screen D5 for (third) confirmation of use of a security option, which is displayed in a processing of Step S15 of Fig. 7.
Fig. 23 is a front view illustrating a screen D6 for (fourth) confirmation of use of a security option, which is displayed in a processing of Step S 19 of Fig. 7.
Fig. 24 is a front view illustrating a screen D7 for (fifth) confirmation of use of a security option, which is displayed in a processing of Step S12 of Fig. 7.
Fig. 25 is a front view illustrating a screen D8 for a (first) notification that the security function is operated due to the cancellation of the apparatus connection, which is displayed in a processing of Step S41 of Fig. 11.
Fig. 26 is a front view illustrating a screen D9 for a (second) notification that the security function is operated due to the cancellation of the apparatus connection, which is displayed in a processing of Step S45 of Fig. 11.
Fig. 27 is a front view illustrating a screen D 10 for a (first) notification that the security function is operated because the apparatus connection is changed, which is displayed in a processing of Step S31 of Fig. 10.
Fig. 28 is a front view illustrating a screen D11 for a (second) notification that the security function is operated because the apparatus connection is changed, which is displayed in a processing of Step S35 of Fig. 10.
Fig. 29 is a front view illustrating an owner ID menu screen D12 after a PIN number is registered, which is displayed in a processing of Step S51 of Fig. 12.
Fig. 30 is a front view illustrating an owner ID menu screen D 13 at the time when a wrong PIN number is inputted, which is displayed in a processing of Step S56 of Fig. 12.
Fig. 31 is a front view illustrating an owner ID menu screen D 14 after a name, house number, postal code or the security function is changed, which is displayed in processings of Steps S65 to S68 of Fig. 13.
Fig. 32 is a front view illustrating an owner ID menu screen D 15 after the name, house number, postal code or security function is changed, which is displayed in the processings of Steps S65 to S68 of Fig. 13.
Fig. 33 is a front view illustrating an owner ID menu screen D16 after the name, house number, or postal code is changed, which is displayed in processings of Steps S69 to S70 of Fig. 13.
Fig. 34 is a front view illustrating a screen D 17 as an ordinary channel-selecting screen, which is displayed in a processing of Step S10 of Fig. 7.

### DESCRIPTION OF REFERENCE SYMBOLS

201...television receiver,
202...controller,
203...non-volatile memory,
203A...ROM,
204...video signal and audio signal processor circuit,
204A...display unit,
205...DVD recorder,
206...controller,
207...non-volatile memory,
208...video signal and audio signal processor circuit,
208A...DVD drive apparatus,
209...apparatus control line,
210...video signal line,
211...audio signal line,
220...infra-red ray signal receiver,
221... remote controller,
222...keyboard, and
223...infra-red ray signal transmitter.

### BEST MODE FOR CARRYING OUT AN INVENTION

Hereinafter, preferred embodiments according to the present invention are described referring to the drawings.

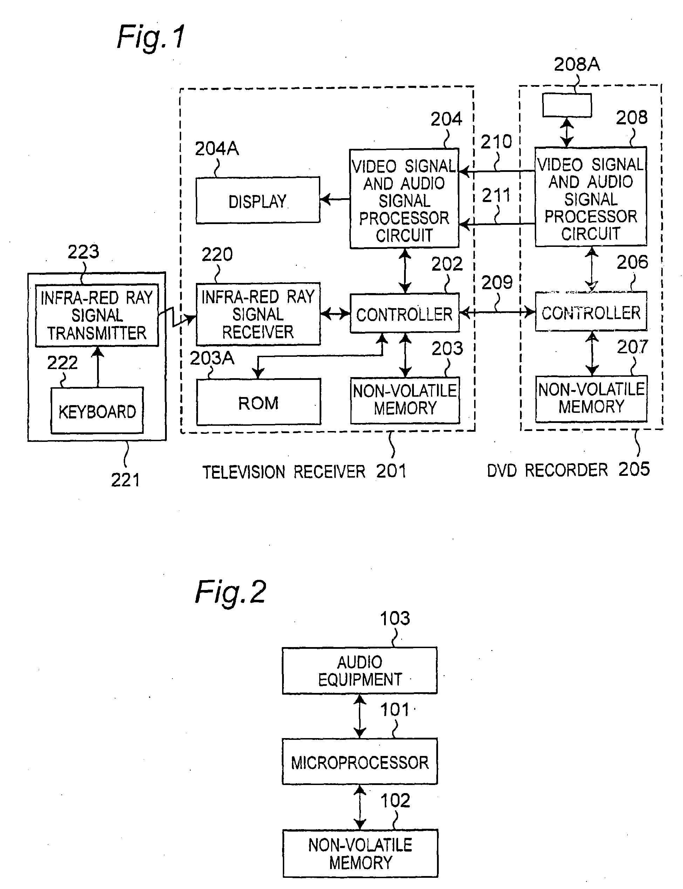

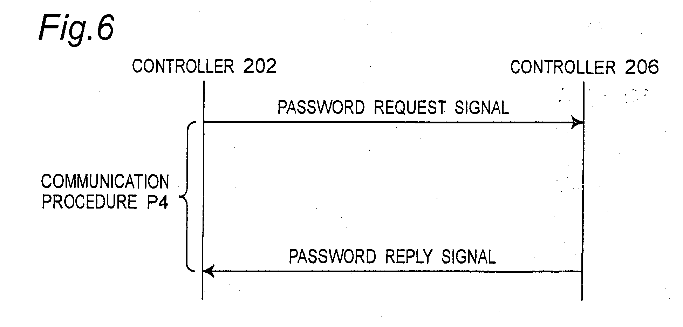

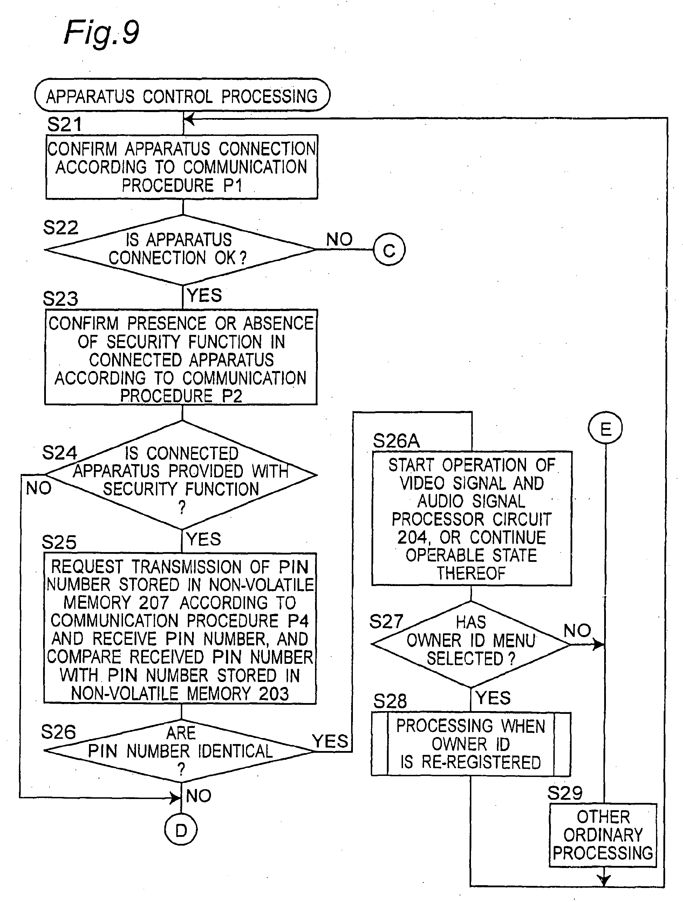

Fig. 1 is a block diagram illustrating a configuration of a security system including a television receiver 201 and a DVD recorder 205 according to a preferred embodiment of the present invention. The security system according to the preferred embodiment includes the television receiver 201 and the DVD recorder 205 connected to each other via an apparatus control line 209. The DVD recorder 205 includes a non-volatile memory 207 previously storing a password. The television receiver 201 includes a non-volatile memory 203 previously storing the password, and a controller 202. The controller 202 requests the DVD recorder 205 to transmit the password stored in the non-volatile memory 207 using a communication procedure P4 of Fig. 6 when the television receiver 201 is activated or started up. The controller 202 receives the password from the DVD recorder 205. The controller 202 compares the received password with the password stored in the non-volatile memory 203 (at Step S25 of Fig. 9). When the passwords coincide with each other (YES at Step S26), the controller 202 starts an operation of the television receiver 201 (at Step S26A). In the present preferred embodiment, a PIN number (Personal Identification Number) is used as the password.

Referring to Fig. 1, the television receiver 201 as a main apparatus includes the controller 202 for controlling the operation thereof, the non-volatile memory 203 for storing data such as the PIN number as the password, for example, EEPROM, a flash memory or the like, a ROM (read-only memory) 203A for storing data such as a special PIN number for customer engineer, a video signal and audio signal processor circuit 204, a display unit 204A, and an infra-red ray signal receiver 220 for receiving an infra-red ray signal from an infra-red ray signal transmitter 223 of a remote controller 221. The television receiver 201 is additionally provided with the remote controller 221 used by a user to remotely control the operation of the television receiver 201. The remote controller 221 includes a keyboard 222 for inputting data such as the password and channel-selection data, and the infra-red ray signal transmitter 223 for transmitting the inputted data to the infra-red ray signal receiver 220.

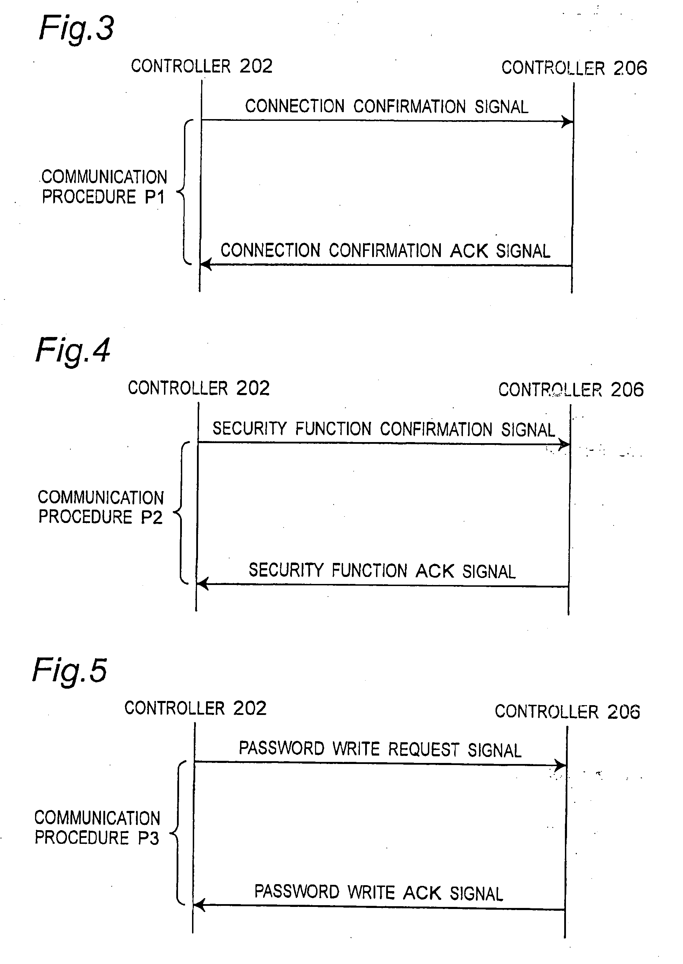

The DVD recorder 205 includes a controller 206 for controlling operation thereof, the non-volatile memory 203, such as the EEPROM, flash memory or the like, which is connected to the controller 206 and stores the data such as the PIN number as the password and information on whether or not a security function is included, a video signal and audio signal processor circuit 208, and a DVD drive apparatus 208A. The controller 202 of the television receiver 201 and the controller 206 of the DVD recorder 205 are connected to each other via the apparatus control line 209 used for controlling electronic apparatuses, such as a 21 pin skirt cable used in an electronic apparatus in Europe, HDMI (High Definition Multimedia Interface) cable and a control cable in compliance with IEEE 1394. The controllers 202 and 206 transmit and receive various signals therebetween using the communication procedures P1 to P4 described later referring to Figs. 3 to 6. In the present preferred embodiment, the connection using the apparatus control line 209 is referred to as "an apparatus connection". The video signal and audio signal processor circuit 204 and the video signal and audio signal processor circuit 208 are connected to each other via a video signal line 210 and an audio signal line 211. The video signal and audio signal processor circuit 208, whose operation is controlled by the controller 206, executes a predetermined signal processing to a video signal and an audio signal reproduced in the DVD drive apparatus 208A, and then transmits the video and audio signals to the video signal and audio signal processor circuit 204 via the video signal line 210 and the audio signal line 211.

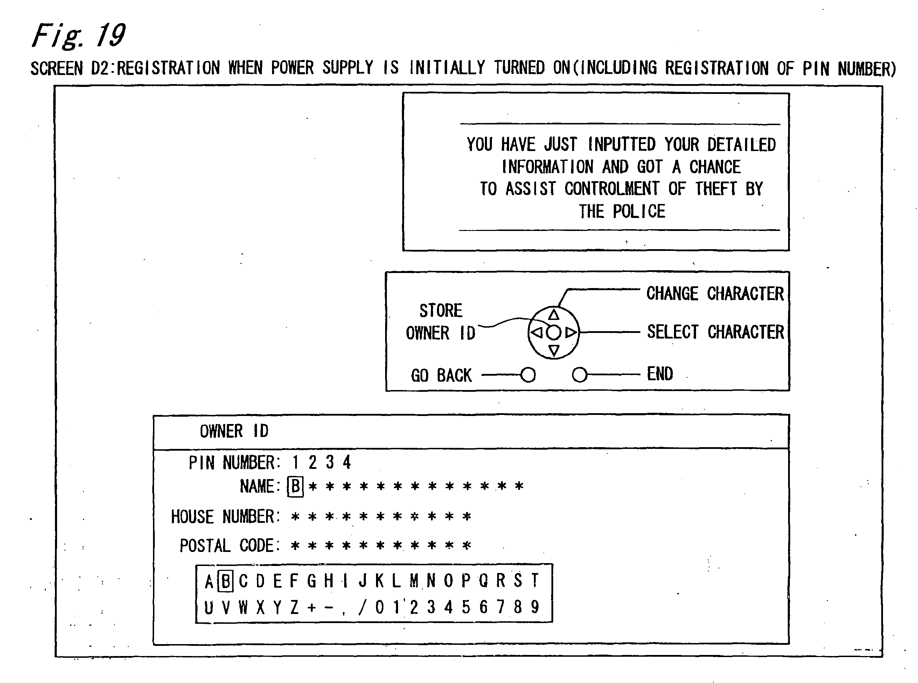

In the remote controller 221 additionally provided in the television receiver 201, the keyboard 222 includes arrow keys including a central key, numeric keypad, functional keys and the like, for example, as shown on a screen D2 of Fig. 19. The user inputs the data such as the password and channel-selection information with the keyboard 222. The inputted data is transmitted by radio to the infra-red ray signal receiver 220 by the infra-red ray signal transmitter 223, and outputted to the controller 202. The data such as the PIN number stored in the non-volatile memory 203 is read out by the controller 202, and the data such as the special PIN number stored in the ROM 203A is read out by the controller 202. The video signal and audio signal processor circuit 204, whose operation is controlled by the controller 202, receives the video signal and the audio signal from the video signal and audio signal processor circuit 208, and executes a predetermined signal processing thereto. Then, the video signal and audio signal processor circuit 204 outputs the signal-processed signals to the display unit 204A and a speaker (not shown).

Referring to Figs. 3 to 6, below are described various kinds of communication procedures P1 to P4 executed between the controller 202 of the television receiver 201 used as the main apparatus and the controller 206 of the DVD recorder 205 as an auxiliary apparatus via the apparatus control line 209.

Fig. 3 is a sequence diagram illustrating the communication procedure P1 between the controller 202 and the controller 206 of Fig. 1. In Fig. 3, the controller 202 transmits a connection confirmation signal to the controller 206. In response to the connection confirmation signal, the controller 206 transmits a connection confirmation ACK signal (ACK is an abbreviation for acknowledgement) to the controller 202 upon receiving the connection confirmation signal. This leads to that the controller 202 and the controller 206 can confirm that the apparatuses are normally connected via the apparatus control line 209.

Fig. 4 is a sequence diagram illustrating the communication procedure P2 between the controller 202 and the controller 206 of Fig. 1. In Fig. 4, the controller 202 transmits a security function confirmation signal to the controller 206. In response to the security function confirmation signal, the controller 206 reads out information on whether or not the DVD recorder 205 has the security function from the non-volatile memory 207. The controller 206 transmits a security function ACK signal to the controller 202 when the DVD recorder 205 has the security function. On the other hand, the controller 206 does not transmit the security function ACK signal to the controller 202 when the DVD recorder 205 does not have the security function. This leads to that the controller 202 and the controller 206 can confirm whether or not the DVD recorder 205 has the security function.

Fig. 5 is a sequence diagram illustrating the communication procedure P3 between the controller 202 and the controller 206 of Fig. 1. In Fig. 5, the controller 202 transmits a password write request signal including the password to be written to the controller 206. In response to the password write request signal, the controller 206 writes the password included in the password write request signal in the non-volatile memory 207, and then, transmits a password write ACK signal to the controller 202. This leads to that the password can be written in the non-volatile memory 207 from the controller 202 via the controller 206, and the controller 202 can confirms a result of the password writing.

Fig. 6 is a sequence diagram illustrating the communication procedure P4 between the controller 202 and the controller 206 of Fig. 1. In Fig. 6, the controller 202 transmits the password write request signal for requesting the password stored in the non-volatile memory 207 to the controller 206. In response to the password write request signal, the controller 206 reads out the password stored in the non-volatile memory 207, and transmits a password reply signal including the password to the controller 202. This leads to that the password stored in the non-volatile memory 207 can be read out, and received from the controller 202 via the controller 206.

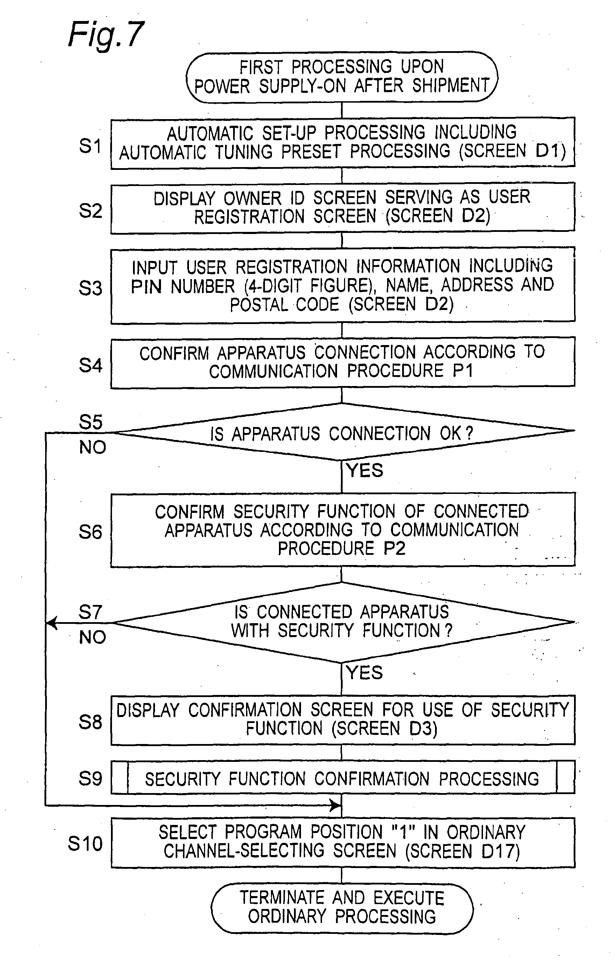

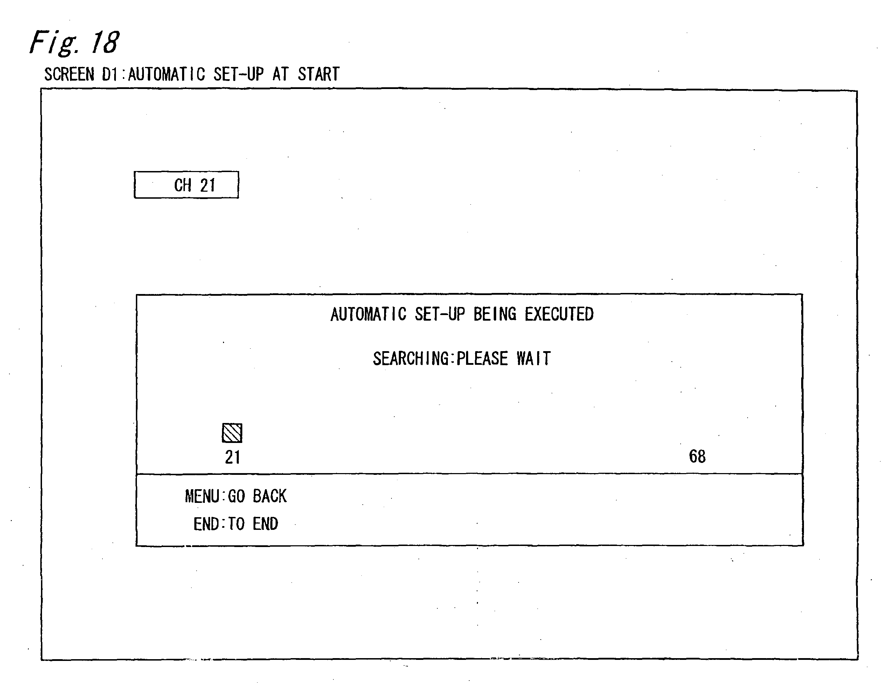

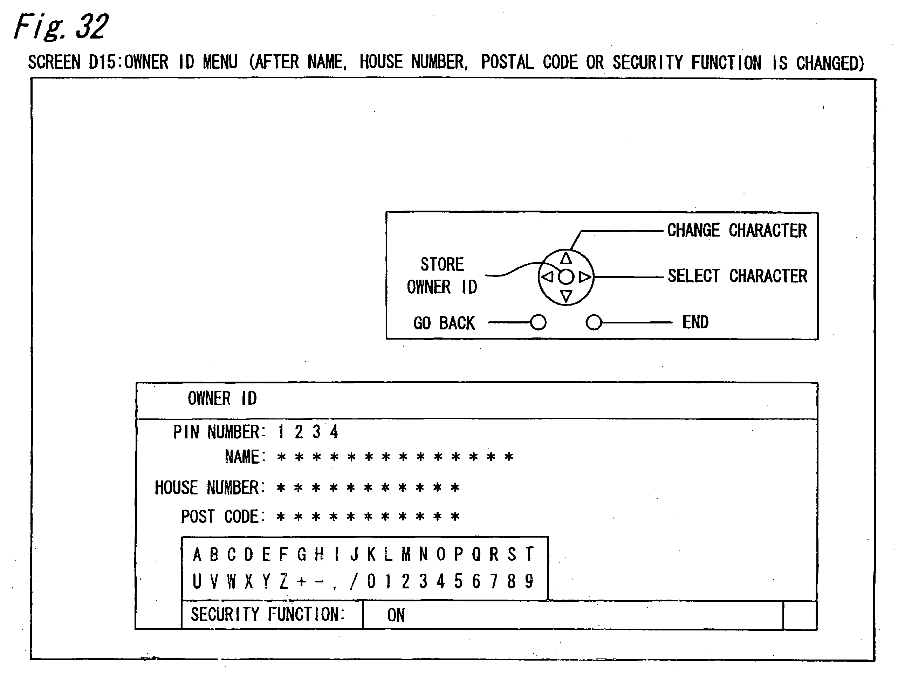

Fig. 7 is a flow chart illustrating a first processing executed by the controller 202 of Fig. 1 when a power supply is turned on after shipment. In each control processing hereinafter, a screen is displayed on the display unit 204A. Each of Screens D1 to D17 illustrated in Figs. 18 to 34 shows an example.

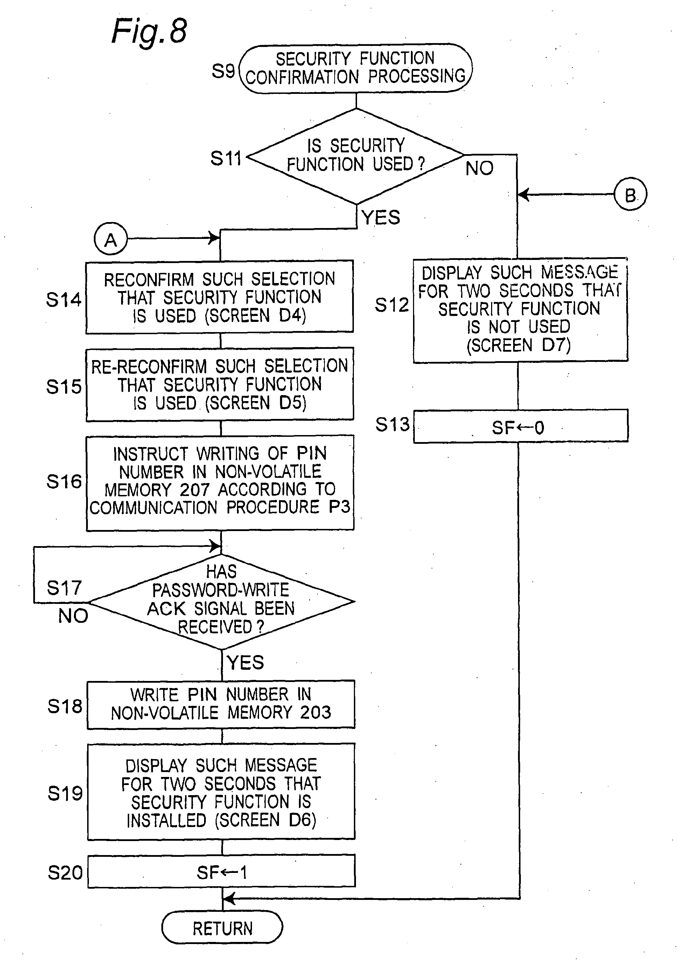

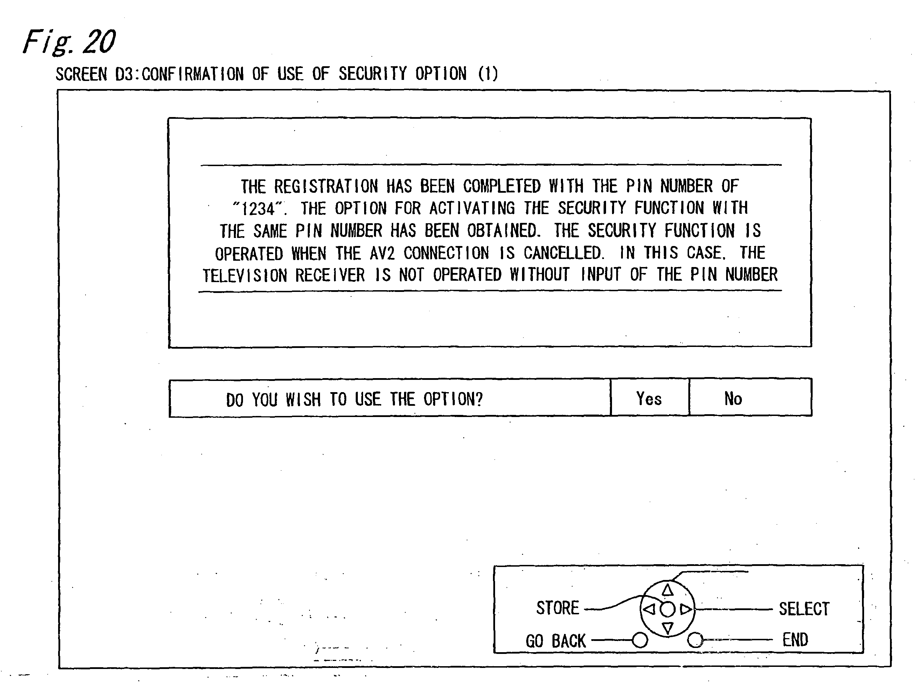

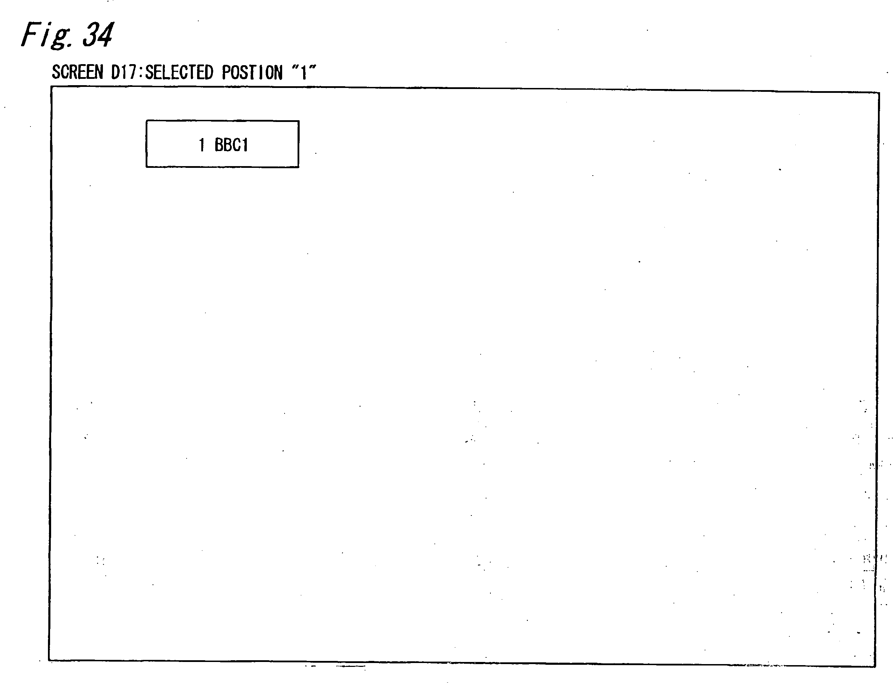

Referring to Fig. 7, at Step S1, a screen D1 of Fig. 18 is displayed, and an automatic set-up processing including an automatic tuning preset processing is executed. At Step S2, the screen D2 of Fig. 19, which is an owner ID (Identification) screen serving as a user registration screen is displayed. Next, the user inputs user registration information including the PIN number (four-digit figure), name, address, and postal code on the screen D2 with the keyboard 222. At Step S4, the apparatus connection is confirmed according to the communication procedure P1. At Step S5, it is judged whether or not the apparatus connection is done. If YES at Step S5, the control flow proceeds to Step S6. On the other hand, if NO at Step S5, the control flow proceeds to Step S10. At Step S6, the security function of the DVD recorder 205 used as the connected apparatus is confirmed according to the communication procedure P2. At Step S7, It is judged whether or not the connected apparatus includes the security connected apparatus. If YES at Step S7, the control flow proceeds to Step S8. On the other hand, if NO at Step S7, the control flow proceeds to Step S10. At Step S8, a screen for confirming use of the security function (screen D3 of Fig. 20) is displayed. In a security function confirmation processing of Step S9 (Fig. 8), it is confirmed whether or not the user wishes to use the security function, and the control flow proceeds to Step S10. The user selects YES on the screen D3 when the user uses the security function. On the other hand, the user selects NO on the screen D3 when the user does not use the security function. At Step 10, a program position "1" is selected on an ordinary channel-selecting screen as shown on a screen D 17 of Fig. 34, and then, the control flow is terminated. Then, an ordinary processing (for example, Step S29 of Fig. 9) is executed.

In Fig. 7, when the apparatus connection is undone (NO at Step S5) or the connected apparatus is not provided with the security function (NO at Step S7), the entry item relating to the security function is not displayed because the security function confirmation processing is not executed. Thus, the user is not notified of the presence of the security function in the television receiver 201. This leads to that the user is not provided with any unnecessary information, and the operation can be simplified.

Fig. 8 is a flow chart illustrating the security function confirmation processing (Step S9) which is a subroutine of Fig. 7.

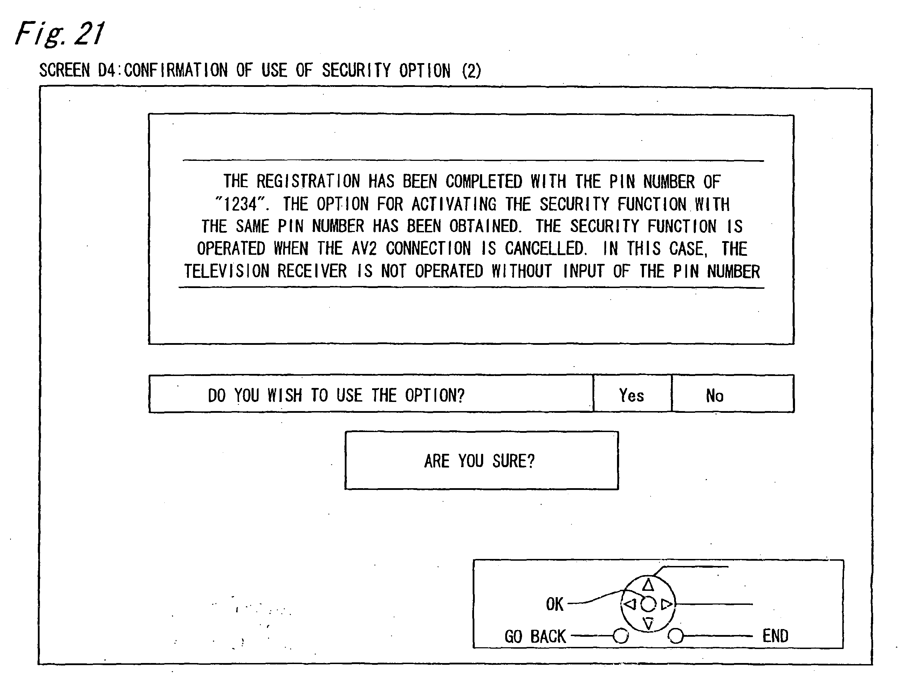

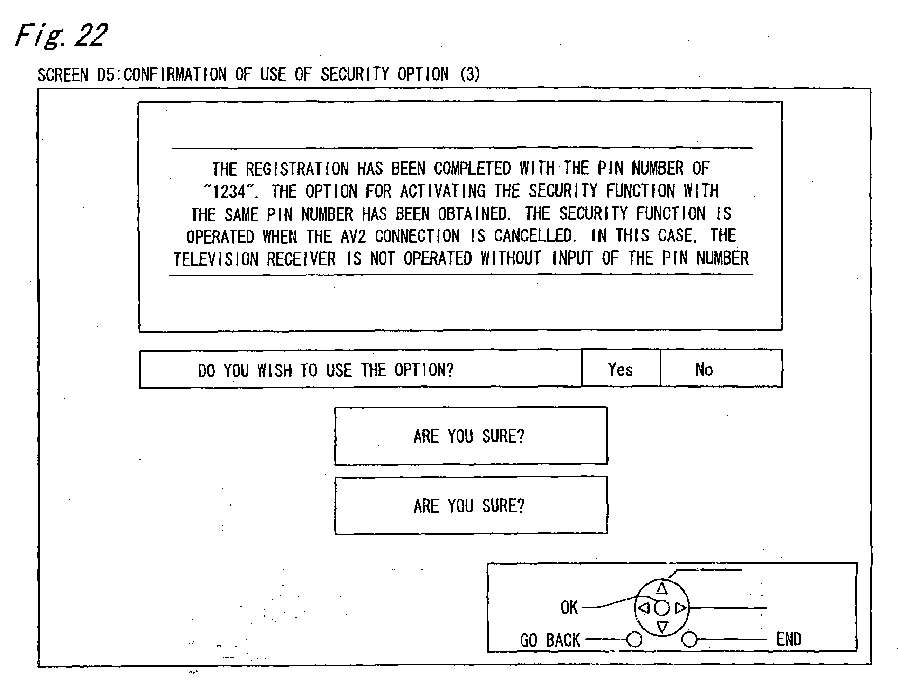

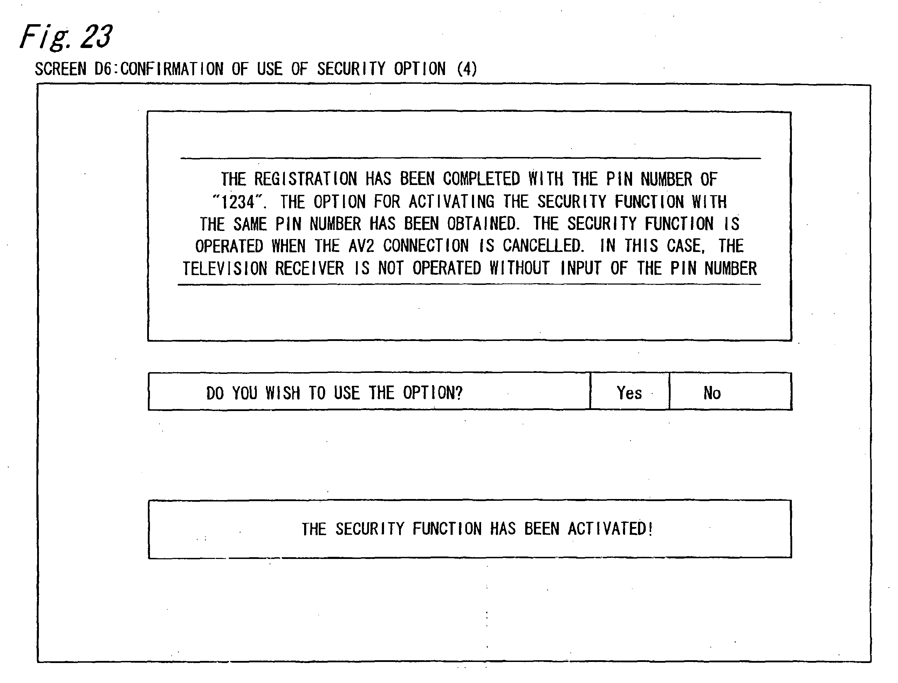

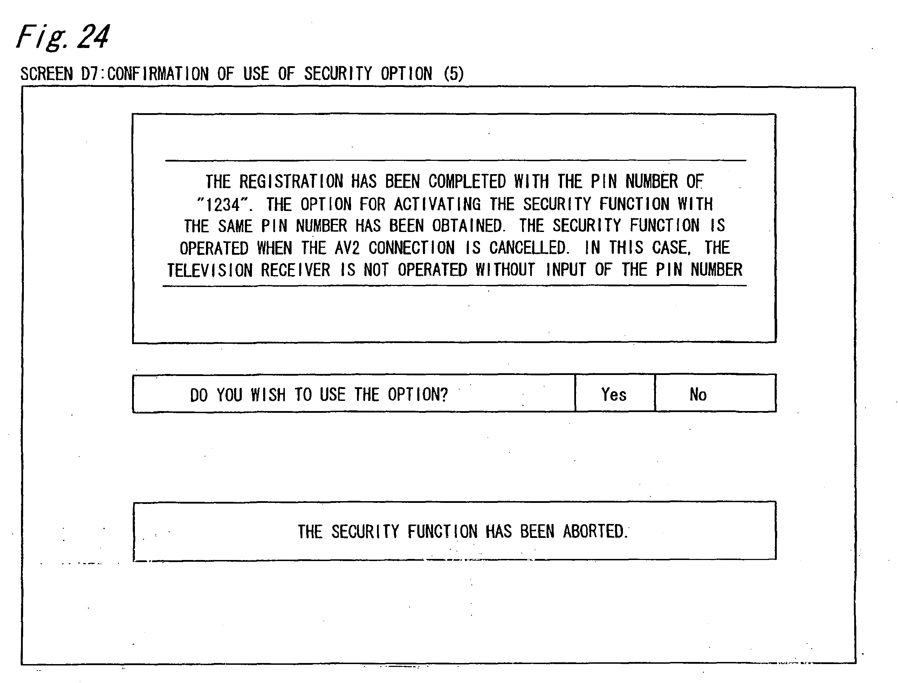

In Fig. 8, at Step S11, it is judged whether or not the security function is used. At Step S 12, as shown on a screen D7 of Fig. 24, a message indicating that the security function is not used is displayed for two seconds, and a security flag SF is reset to 0. Then, the control flow returns to a main routine. The security flag SF indicates that the security function is used when set to 0. On the other hand, the security flag SF indicates that the security function is not used when set to 1. At Step S 14, a screen D4 for reconfirmation of the use of the security function (Fig. 21) is displayed. If the use of the security function is affirmatively reconfirmed, a screen D5 (Fig. 22) for re-reconfirmation of the use of the security function is displayed at Step S15. If the use of the security function is affirmatively re-reconfirmed, the control flow proceeds to Step S16. At Step S16, the controller 206 is instructed to write the PIN number inputted at Step S3 in the non-volatile memory 207 according to the communication procedure P3. Then, at Step S17, it is judged whether or not the password ACK signal was received, and the processing of Step S 17 is repeated until YES is obtained at Step S17. When YES at Step S17, the PIN number is written in the non-volatile memory 203 at Step S 18. At Step S 19, a message indicating that the security function is installed is displayed for two seconds as shown on a screen D6 of Fig. 23. The security flag SF is set to 1. Then the control flow returns to the main routine.

Figs. 9 to 11 are flow charts illustrating the apparatus control processing executed by the controller 202 of Fig. 1.

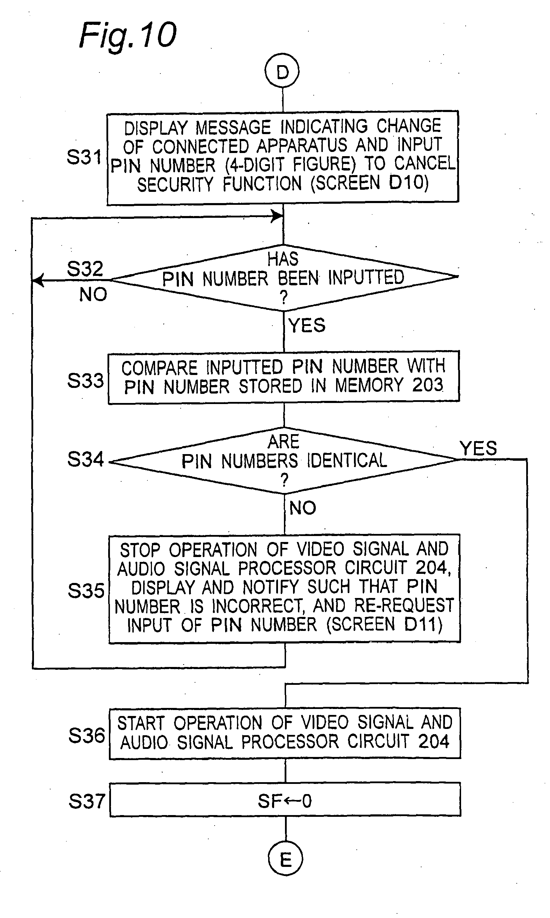

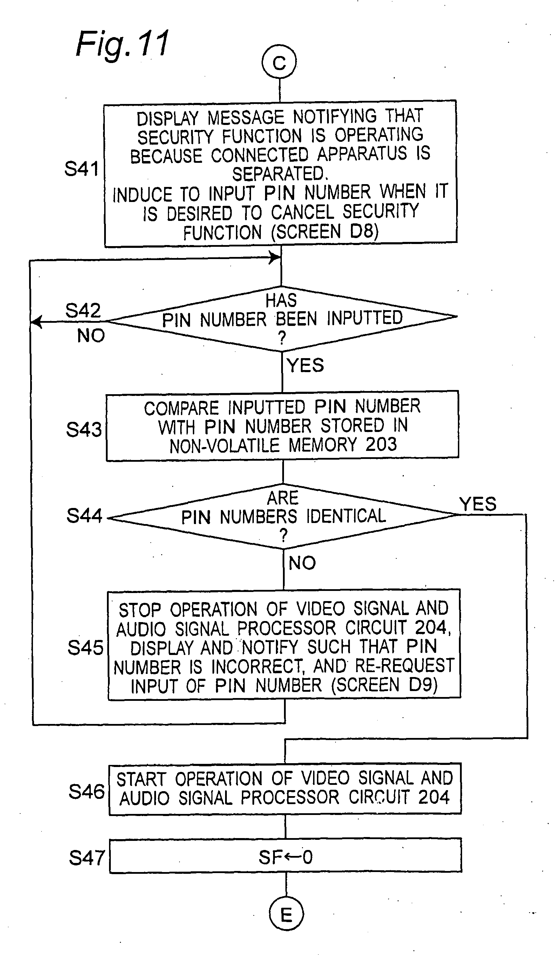

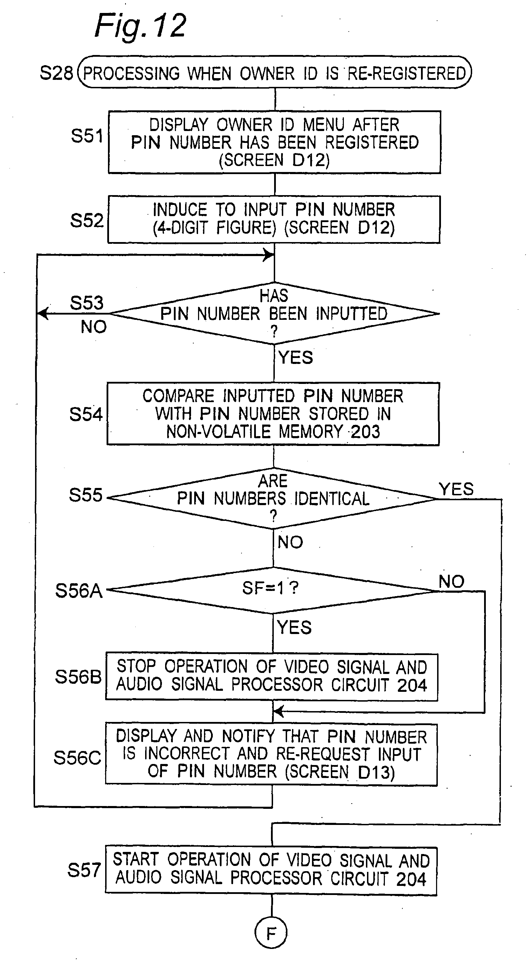

At Step S21 of Fig. 9, the apparatus connection is confirmed according to the communication procedure P1. At Step S22, it is judged whether or not the apparatus connection is done. If YES at Step S22, the control flow proceeds to Step S23. On the other hand, if NO at Step S22, the control flow proceeds to Step S41 of Fig. 11. At Step S23, the presence or absence of the security function in the DVD recorder 205 used as the connected apparatus is confirmed according to the communication procedure P2. At Step S24, it is judged whether or not the security function is included. If YES at Step S24, the control flow proceeds to Step S25. On the other hand, if NO at Step S24, the control flow proceeds to Step S31 of Fig. 10. At Step S25, the transmission of the PIN number stored in the non-volatile memory 207 is requested according to the communication procedure P4, and the PIN number is received from the controller 206 via the apparatus control line 209, and the received PIN number is compared with the PIN number stored in the non-volatile memory 203. At Step S26, it is judged whether or not the PIN numbers coincide with each other. If YES at Step S26, the control flow proceeds to Step S26A. On the other hand, if NO at Step S26, the control flow proceeds to Step S31 of Fig. 10. At Step S26A, the operation of the video signal and audio signal processor circuit 204 is started, or an operable state is maintained. At Step S27, it is judged whether or not the owner ID menu has been selected on a predetermined menu screen. If YES at Step S27, the control flow proceeds to Step S28. On the other hand, if NO at Step S27, the control flow proceeds to Step S29. At Step S28, an owner ID re-registration processing of Figs. 12 to 14 is executed, and the control flow returns to Step S21. At Step S29, the other ordinary processing is executed. Then the control flow returns to Step S21.

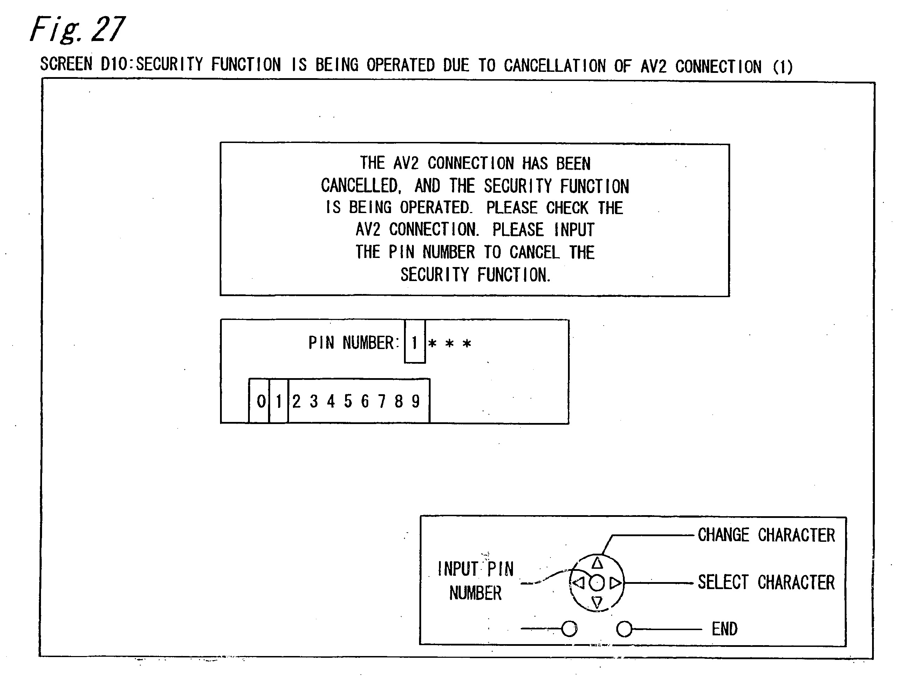

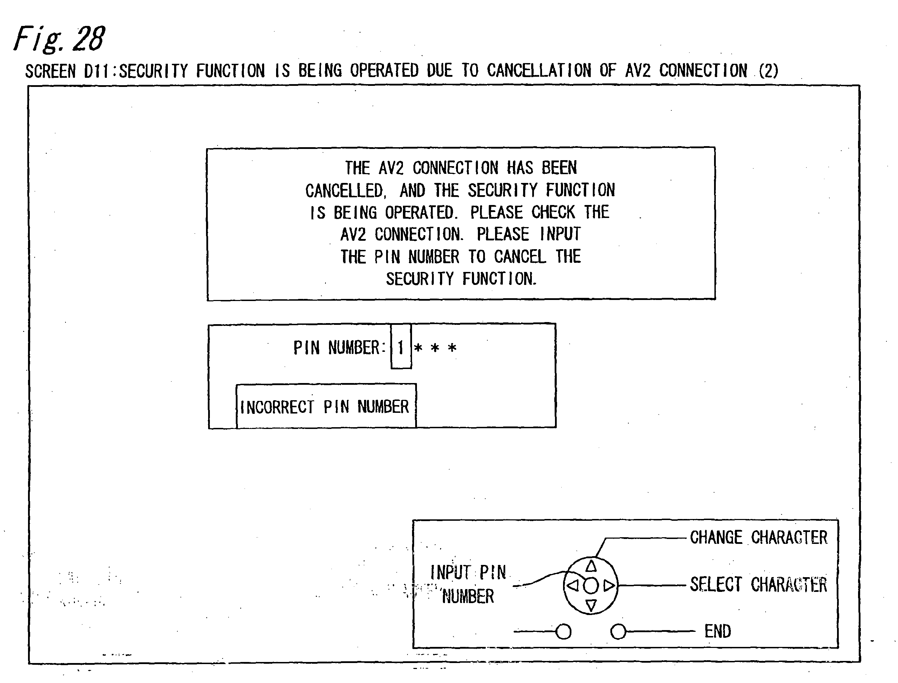

At Step S31 of Fig. 10, a message indicating that the connected apparatus is changed is displayed as shown on a screen D10 of Fig. 27. The user is instructed to input the PIN number (four-digit figure) in order to cancel the security function. At Step S32, it is judged whether or not the PIN number has been inputted. If YES at Step S32, the control flow proceeds to Step S33. On the other hand, if NO at Step S32, the control flow returns to Step S32. At Step S33, The inputted Pin number and the PIN number stored in the non-volatile memory 203 are compared with each other. At Step S34, it is judged whether or not the PIN numbers coincide with each other. If YES at Step S34, the control flow proceeds to Step S36. On the other hand, if NO at Step S34, the control flow proceeds to Step S35. At Step S35, the operation of the video signal and audio signal processor circuit 204 is stopped, and it is displayed and notified that the PIN number is incorrect as shown on a screen D 11 of Fig. 28. Then, the input of the PIN number is requested again. The control flow then returns to Step S32. At Step S36, the operation of the video signal and audio signal processor circuit 204 is started. At Step S37, the security flag is reset to 0 so as to cancel the security function. Then, the control flow proceeds to Step S29 of Fig. 9.

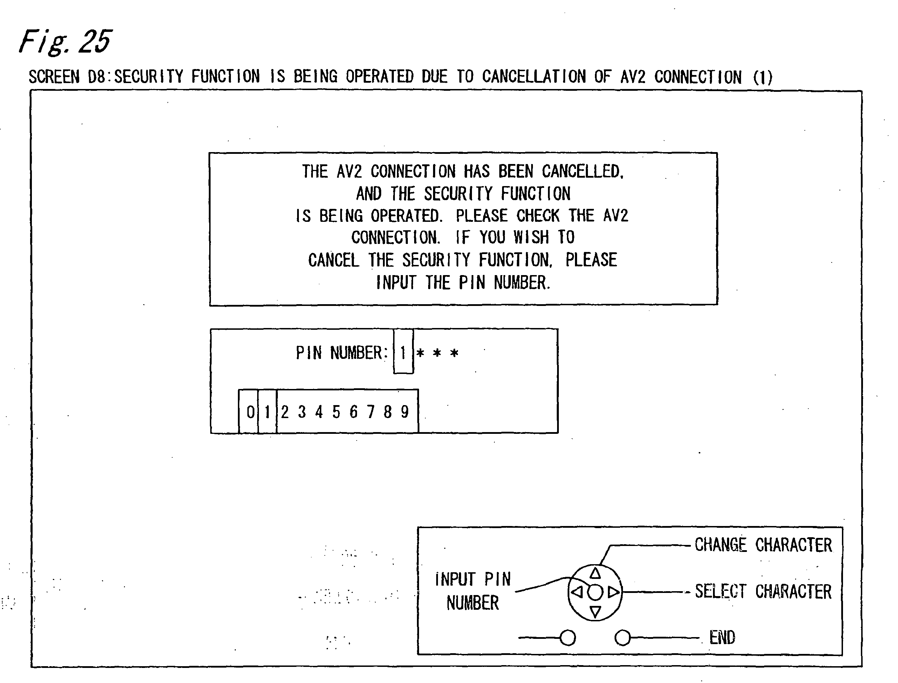

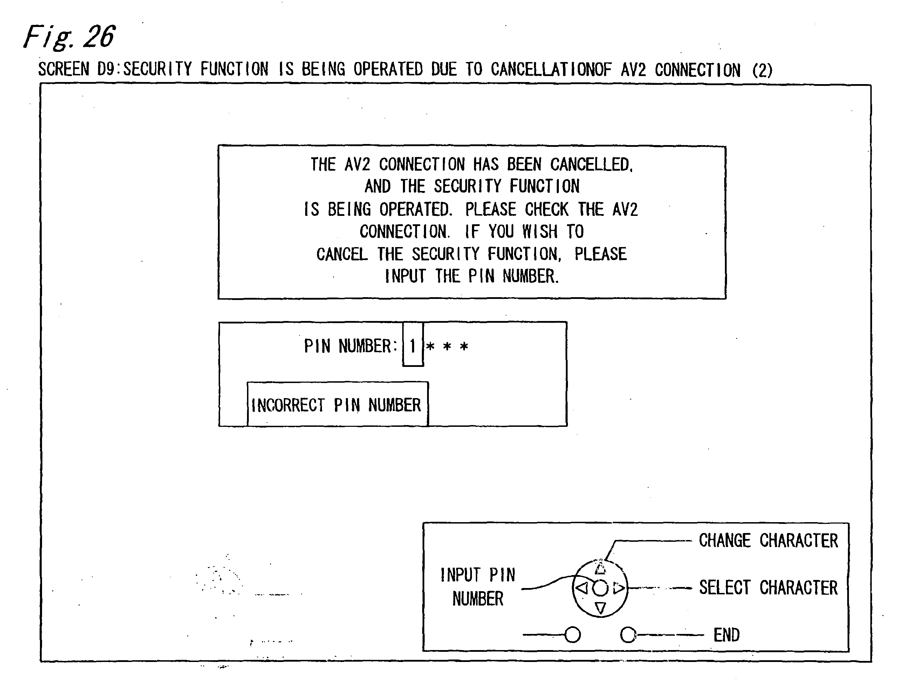

At Step S41 of Fig. 11, a message indicating that the security function is operated is displayed, as shown on a screen D8 of Fig. 25, because the connected apparatus is separated. The user is instructed to input the PIN number when the user wishes to cancel the security function. At Step S42, it is judged whether or not the PIN number has been inputted. If YES at Step S42, the control flow proceeds to Step S43. On the other hand, if NO at Step S42, the control flow returns to Step S42. At Step S43, the inputted PIN number and the PIN number stored in the non-volatile memory 203 are compared with each other. At Step S44, it is judged whether or not the PIN numbers coincide with each other. If YES at Step S44, the control flow proceeds to Step S46. On the other hand, if NO at Step S44, the control flow proceeds to Step S45. At Step S45, the operation of the video signal and audio signal processor circuit 204 is stopped, and it is displayed and notified that the PIN number is incorrect, as shown on a screen D9 of Fig. 26. Then, the input of PIN number is requested again. The control flow returns to Step S42. At Step S46, the operation of the video signal and audio signal processing circuit 204 is started. At Step S47, the security flag SF is reset to 0 so as to cancel the security function. The control flow then proceeds to Step S29 of Fig. 9.

Figs. 12 to 14 are flow charts of a processing executed when the owner is ID re-registered (Step S28) which is a subroutine of Fig. 9.

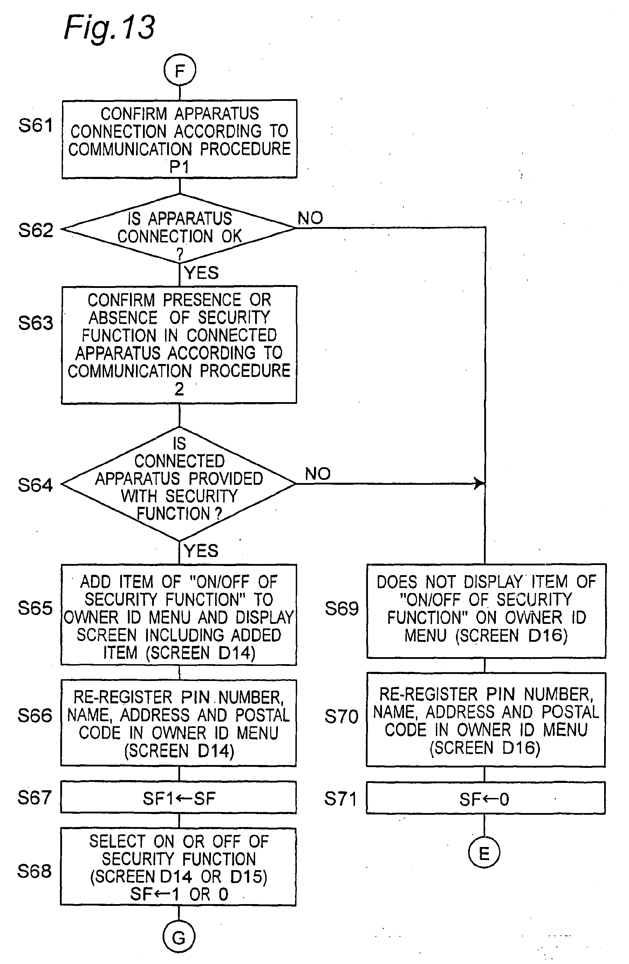

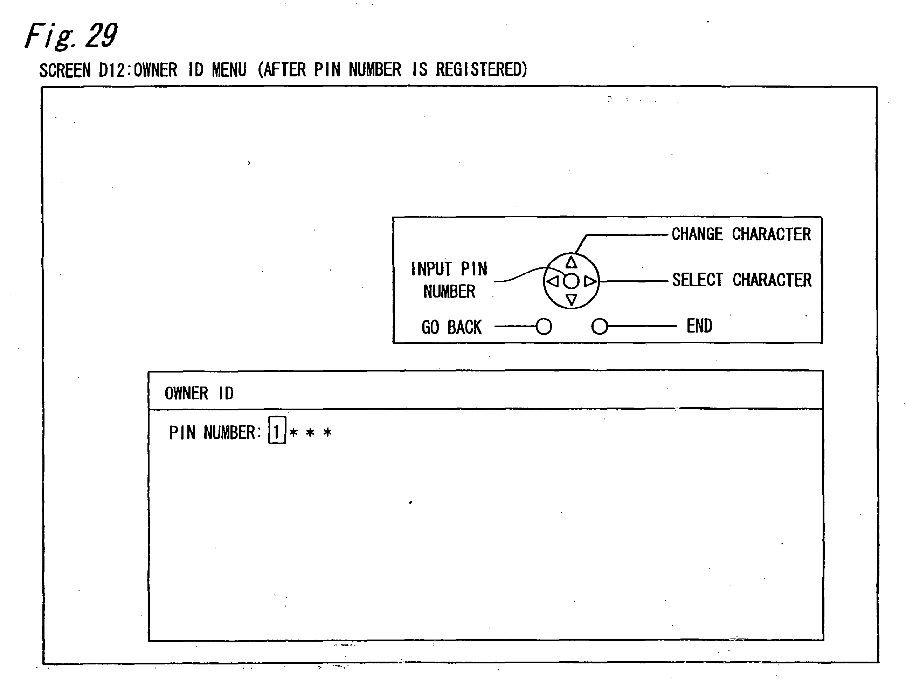

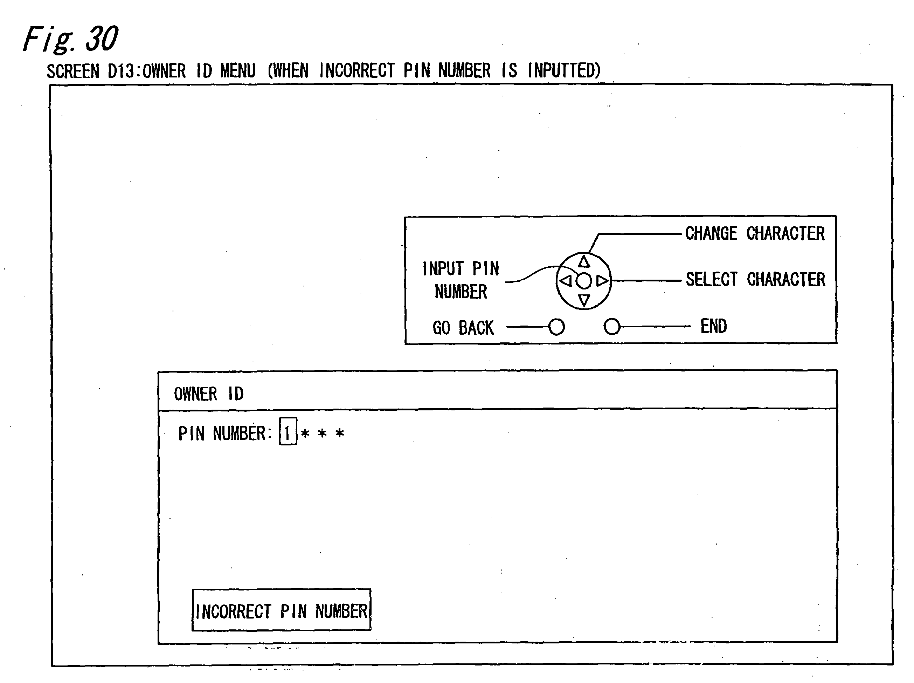

At Step S51 of Fig. 12, the owner ID menu is displayed, as shown on a screen D 12 of Fig. 29. At Step S52, the user is instructed to input the PIN number (four-digit figure). At Step S53, it is judged whether or not the PIN number has been inputted. If YES at Step S53, the control flow proceeds to Step S54. On the other hand, if NO at Step S53, the control flow returns to Step S53. At Step S54, The inputted PIN number and the PIN number stored in the non-volatile memory 203 are compared with each other. At Step S55, It is judged whether or not the PIN numbers coincide with each other. If YES at Step S55, the control flow proceeds to Step S57. On the other hand, if NO at Step S55, the control flow proceeds to Step S56A. At Step S56A, it is judged whether or not the security flag is 1, that is, it is judged whether or not the security function is set. If YES at Step S56A, the control flow proceeds to Step S56B. On the other hand, if NO at Step S56A, the control flow proceeds to Step S56C. At Step S56B, the operation of the video signal and audio signal processor circuit 204 is stopped. At Step S56C, it is displayed and notified that the PIN number is incorrect as shown on a screen D 13 of Fig. 30. Then, the input of the PIN number is requested again. The control flow then returns to Step S53. At Step S57, the operation of the video signal and audio signal processor circuit 204 is started. Then, the control flow proceeds to Step S61 of Fig. 13.

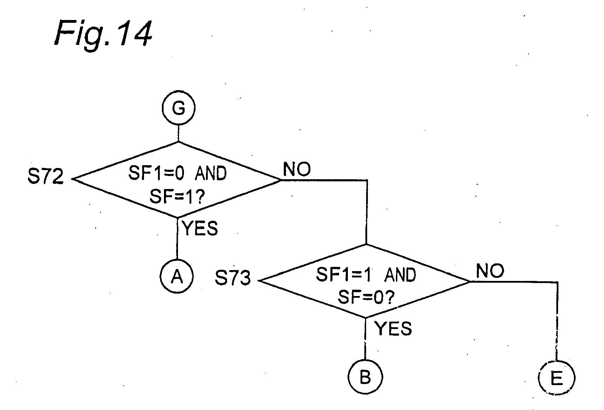

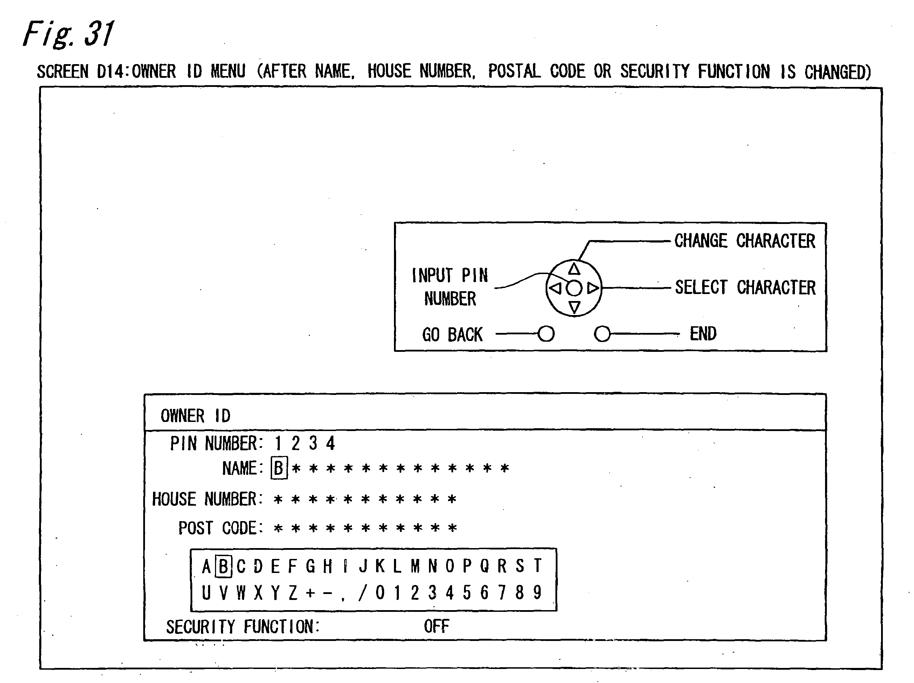

The apparatus connection is confirmed according to the communication procedure P1 at Step S61 of Fig .13. At Step S62, it is judged whether or not the apparatus connection is done. If YES at Step S62, the control flow proceeds to Step S63. On the other hand, if NO at Step S62, the control flow proceeds to Step S69. At Step S63, the presence or absence of the security function in the DVD recorder 205 is confirmed according to the communication procedure P2. At Step S64, it is judged whether or not the security function is included. If YES at Step S64, the control flow proceeds to Step S65. On the other hand, if NO at Step S64, the control flow proceeds to Step S69. At Step S65, the item of the "security function" is added to the owner ID menu and displayed, as shown on a screen D 14 of Fig. 31. At Step S66, the PIN number, name, address and postal code are re-registered in the owner ID menu. At Step S67, the current value of the security flag SF is saved in a save security flag SF1. Further, at Step S68, the ON or OFF of the security function is selected on the screen D 14 or D 15. The screen D 14 shows that the security function is turned off. The screen D 15 shows that the security function is turned on. When the security function is turned on, 1 is set to the security flag SF. The security flag SF is reset to 0 when the security function is turned off. Then, the control flow proceeds to Step S72 of Fig. 14.

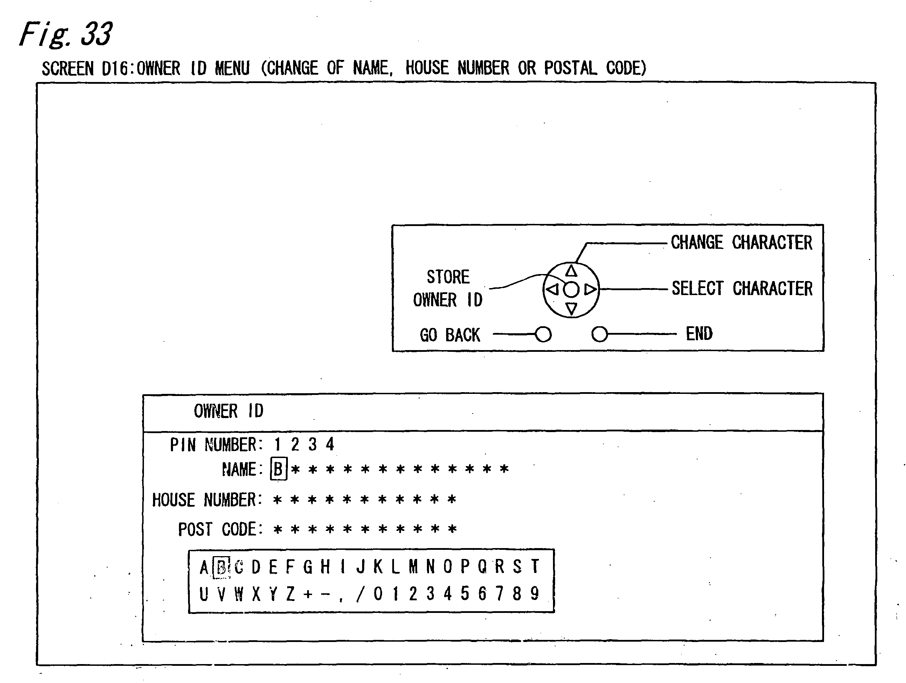

At Step S69 of Fig. 13, the item of the "security function" is not displayed on the owner ID menu, as shown on a screen D16 of Fig. 33. At Step S70, the PIN number, name, address and postal code are re-registered on the owner ID menu. At Step S71, the security flag SF is reset to 0. Then, the other ordinary processing at Step S29 of Fig. 9 is executed.

Referring to Fig. 13, when the apparatus connection is undone (NO at Step S62) or the connected apparatus is not provided with the security function (NO at Step S64), the entry item relating to the security function is not displayed because the security function confirmation processing is not executed. The user is not notified of the presence of the security function in the television receiver 201. This leads to that the user is not provided with any unnecessary information, and the operation can be simplified.

At Step S72 of Fig. 14, it is judged whether or not SF1 = 0 and SF = 1, that is, it is judged whether or not the setting of the security function shifts from OFF to ON. If YES at Step S72, the control flow proceeds to Step S14 of Fig. 8. On the other hand, if NO at Step S72, the control flow proceeds to Step S73. At Step S73, it is judged whether or not SF1 = 1 and SF = 0, that is, it is judged whether or not the setting of the security function shifts from ON to OFF. If YES at Step 73, the control flow proceeds to Step S12 of Fig. 8. On the other hand, if NO at Step 73, the control flow proceeds to the other ordinary processing at Step S29 of Fig. 9.

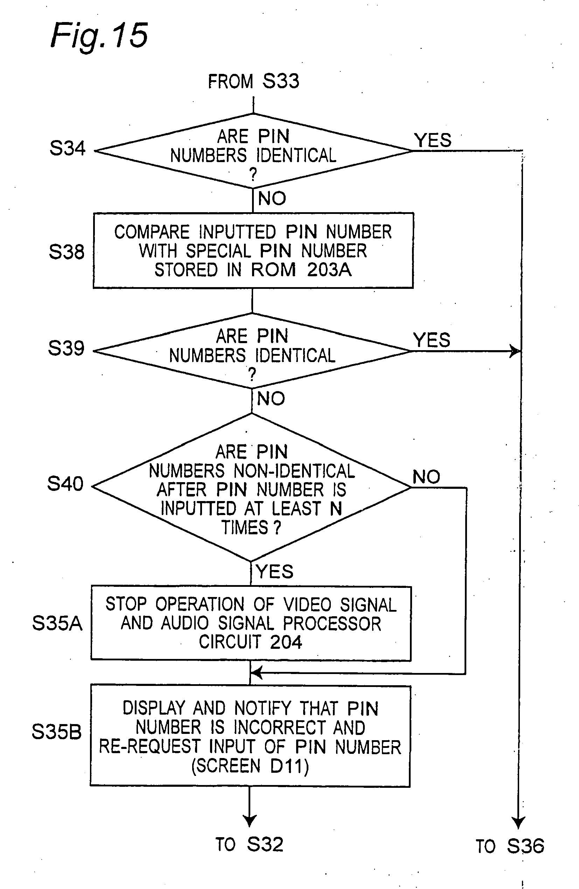

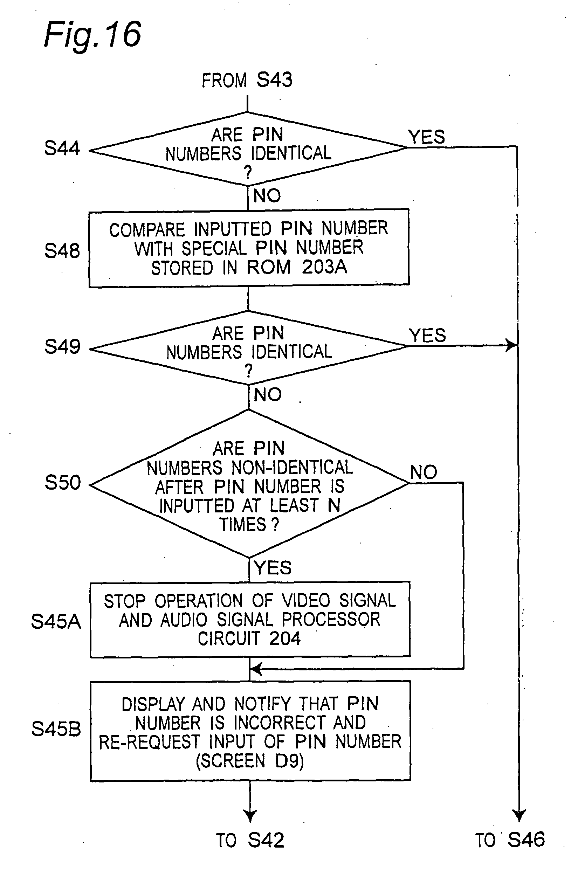

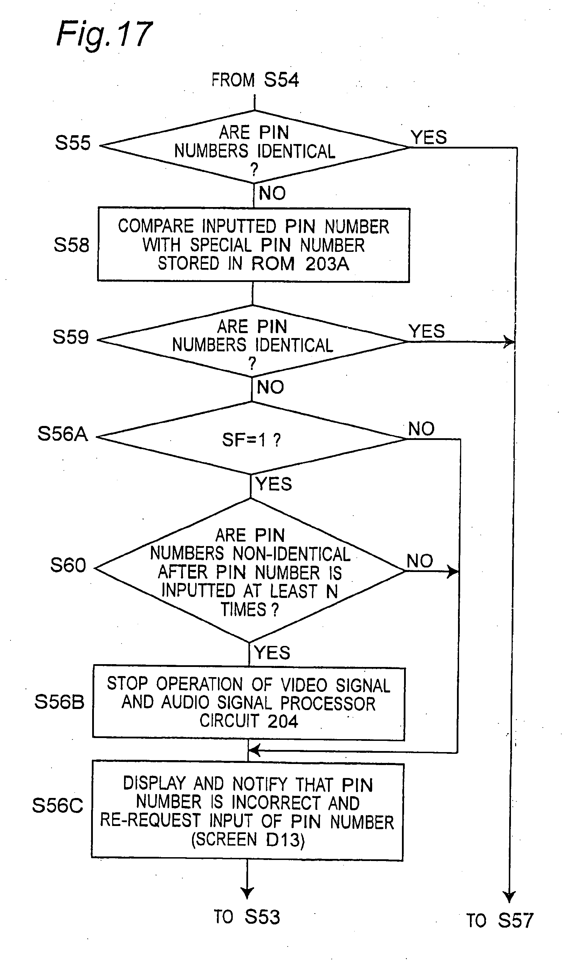

Fig. 15 is a flow chart illustrating a modified example of the processing of Fig. 10. Fig. 16 is a flow chart illustrating a modified example of the processing of Fig. 11. Fig. 17 is a flow chart illustrating a modified example of the processing of Fig. 12. The modified examples of Figs. 15 to 17 are characterized in that there has been added the processing that the special PIN number for customer engineer previously stored in the ROM 203A is judged to be identical, and the processing that the operation of the video signal and audio signal processor circuit 204 is stopped when a PIN number is inputted at least a predetermined number of times N (for example, N is three) and still fails to be identical. The special PIN number is previously stored in the ROM 203A. The special PIN number is provided so that the security function is forcibly cancelled when a manufacturer or a person assigned by the manufacturer, such as a customer engineer, inputs the special PIN number as the password for canceling the security function other than the PIN number inputted by the user, and the operation of the television receiver 201 is started.

The modified example of Fig. 15 is characterized in that processings of Steps S38 to S35B are inserted between Step S34 and Step S32. If NO at Step S34, the inputted PIN number and the special PIN number stored in the ROM 203A are compared with each other at Step S38. At Step S39, it is judged whether or not the PIN numbers coincide with each other. If YES at Step S39, the control flow proceeds to Step S36. On the other hand, if NO at Step S39, the control flow proceeds to Step S40. At Step S40, it is judged whether or not the PIN number is inputted at least the predetermined number of times N and still fails to be identical. If YES at Step S40, the control flow proceeds to Step S35A. On the other hand, if NO at Step S40, the control flow proceeds to Step S35B. At Step S35A, the operation of the video signal and audio signal processor circuit 204 is stopped. At Step S35B, it is displayed and notified that the PIN number is incorrect, as shown on a screen D11 of Fig. 28. The input of the PIN number is requested again. Then, the control flow proceeds to Step S32.

The modified example of Fig .16 is characterized in that processings of Steps S48 to S45B are inserted between Step S44 and Step S42. If NO at Step S44, the inputted PIN number and the special PIN number stored in the ROM 203A are compared with each other at Step S48. At Step S49, it is judged whether or not the PIN numbers coincide with each other. If YES at Step S49, the control flow proceeds to Step S46. On the other hand, if NO at Step S49, the control flow proceeds to Step S50. At Step S50, it is judged whether or not the PIN number is inputted at least the predetermined number of times N and still fails to be identical. If YES at Step S50, the control flow proceeds to Step S45A. On the other hand, if NO at Step S50, the control flow proceeds to Step S45B. At Step S45A, the operation of the video signal and audio signal processor circuit 204 is stopped. At Step S45B, it is displayed and notified that the PIN number is incorrect, as shown on a screen D9 of Fig. 26. The input of the PIN number is requested again. Then, the control flow proceeds to Step S42.

The modified example of Fig. 17 is characterized in that processings of Steps S58 to S56C are inserted between Step S55 and Step S53. If NO at Step S55, the inputted PIN number and the special PIN number stored in the ROM 203A are compared with each other at Step S58. At Step S59, it is judged whether or not the PIN numbers coincide with each other. If YES at Step S59, the control flow proceeds to Step S57. On the other hand, if NO at Step S59, the control flow proceeds to Step S56A. At Step S56A, it is judged whether or not the security flag SF is 1, that is, it is judged whether or not the security function is set. If YES at Step S56A, the control flow proceeds to Step S60. On the other hand, if NO at Step S56A, the control flow proceeds to Step S56C. In the S60, it is judged whether or not the PIN number is inputted at least the predetermined number of times N and still fails to be identical. If YES at Step S60, the control flow proceeds to Step S56B. On the other hand, if NO at Step S60, the control flow proceeds to Step S56C. At Step S56B, the operation of the video signal and audio signal processor circuit 204 is stopped. At Step S56C, it is displayed and notified that the PIN number is incorrect, as shown on the screen D 11 of Fig. 28. The input of the PIN number is requested again. Then, the control flow proceeds to Step S53.

In the foregoing preferred embodiments, the security system including the television receiver 201 and the DVD recorder 205 is disclosed. However, the present invention is not limited to the configuration. The electronic apparatuses used in the security system are not limited to the mentioned apparatuses. Various kinds of electronic apparatuses, such as a television receiving apparatus, a set-top box, a display apparatus, a DVD player or the like, may be used. Further, at least three electronic apparatuses may be connected via the apparatus control line 209 to constitute the security system.

In the foregoing preferred embodiments, the data inputted by the user with the keyboard 222 is transmitted by radio to the controller 202 using the infra-red ray signal. However, the present invention is not limited thereto. The keyboard 222 may be provided in a main body of the television receiver 201.

In the foregoing preferred embodiments, if NO at Step S26 of Fig. 9, the control flow proceeds to Step S31 of Fig. 10. However, the present invention is not limited thereto. "A processings for stopping the operation of the video signal and audio signal processor circuit 204", which is a part of Step S35, may be executed prior to the advancement to Step S31.

### INDUSTRIAL APPLICABILITY

As described in detail so far, according to the security system for use in the electronic apparatus of the present invention, the password is registered in the storage means of the electronic apparatus used as the connected auxiliary apparatus in the security system for use in the plurality of electronic apparatuses connected via the apparatus control line so that the password can be confirmed when the electronic apparatus used as the main apparatus is activated or started up. As far as the apparatus control line is connected, when the passwords coincide with each other between the electronic apparatus used as the main apparatus and the electronic apparatus used as the auxiliary apparatus, the user can activate the electronic apparatus in a manner similar to that of the processing usually executed when the power supply is turned on. The electronic apparatus used as the main apparatus cannot be activated or started up when the electronic apparatus used as the auxiliary apparatus is not connected. As a result, even if the electronic apparatus used as the main apparatus is stolen, it is not possible to activate the same. Accordingly, the theft can be prevented without forcing the user into such a bothersome operation as the input of the password. Further, the system according to the present invention can be effectively realized without increasing the cost.

## Claims

1. A security system for use in a plurality of electronic apparatuses including a first electronic apparatus and a second electronic apparatus connected to each other via an apparatus control line,
wherein the second electronic apparatus comprises second storage means for previously storing a password, and
wherein the first electronic apparatus comprises:
first storage means for previously storing the password; and
control means for requesting the second electronic apparatus to transmit the password stored in the second storage means at activation of the first electronic apparatus, receiving the password from the second electronic apparatus, comparing the received password with the password stored in the first storage means, and executing a security function so as to start an operation of the first electronic apparatus when the passwords coincide with each other.

2. The security system as claimed in Claim 1,
wherein the control means compares the received password with the password stored in the first storage means, and executes the security function so as to stop the operation of the first electronic apparatus when the passwords do not coincide with each other.

3. The security system as claimed in Claim 1,
wherein the first electronic apparatus further comprises:
display means for displaying a message to a user; and
input means for inputting the password, and
wherein the control means compares the received password with the password stored in the first storage means, displays a request of inputting the password to a user on the display means when the passwords do not coincide with each other, compares the password inputted by the user using the input means with the password stored in the first storage means, and starts the operation of the first electronic apparatus when the passwords coincide with each other.

4. The security system as claimed in Claim 3,
wherein the control means compares the password inputted by the user with the password stored in the first storage means, and stops the operation of the first electronic apparatus when the passwords do not coincide with each other.

5. The security system as claimed in Claim 3,
wherein the control means compares the password inputted by the user a predetermined number of times of more than two with the password stored in the first storage means, and stops the operation of the first electronic apparatus when the passwords do not coincide with each other.

6. The security system as claimed in any one of Claims 3 to 5,
wherein the first electronic apparatus further comprises third storage means for previously storing a special password other than the password, and
wherein the control means compares the inputted password with the special password stored in the third storage means, and starts the operation of the first electronic apparatus when the passwords coincide with each other.

7. The security system as claimed in any one of Claims 1 to 6,
wherein the first electronic apparatus further comprises:
first detecting means for detecting whether or not the second electronic apparatus is connected to the first electronic apparatus via the apparatus control line; and
second detecting means for detecting whether or not the second electronic apparatus has the security function using a control signal of the apparatus control line when the first detecting means detects that the second electronic apparatus is connected to the first electronic apparatus, and
wherein the control means executes the processings of the first detecting means and the second detecting means during operation of the first electronic apparatus.

8. The security system as claimed in Claim 7,
wherein the control means stops the processing of the security function, and starts an ordinary operation of the first electronic apparatus when the first detecting means detects that the second electronic apparatus is not connected to the first electronic apparatus.

9. The security system as claimed in Claim 8,
wherein the control means stops the processing of the security function, and starts the ordinary operation of the first electronic apparatus when the second detecting means detects that the second electronic apparatus does not have the security function.

10. A first electronic apparatus provided in a security system for use in a plurality of electronic apparatuses including a first electronic apparatus and a second electronic apparatus connected to each other via an apparatus control line,
wherein the second electronic apparatus comprises second storage means for previously storing a password, and
wherein the first electronic apparatus comprises:
first storage means for previously storing the password; and
control means for requesting the second electronic apparatus to transmit the password stored in the second storage means, receiving the password from the second electronic apparatus when the first electronic apparatus is activated or started up, comparing the received password with the password stored in the first storage means, and executing a security function so as to start an operation of the first electronic apparatus when the passwords coincide with each other.

11. The electronic apparatus for a security system as claimed in Claim 10,
wherein the control means compares the received password with the password stored in the first storage means, and executes the security function so as to stop the operation of the first electronic apparatus when the passwords do not coincide with each other.

12. The electronic apparatus for a security system as claimed in Claim 10,
wherein the first electronic apparatus further comprises:
display means for displaying a message to a user; and
input means for inputting the password, and
wherein the control means compares the received password with the password stored in the first storage means, displays a request of inputting the password to a user on the display means when the passwords do not coincide with each other, compares the password inputted by the user using the input means with the password stored in the first storage means, and starts the operation of the first electronic apparatus when the passwords coincide with each other.

13. The electronic apparatus for a security system as claimed in Claim 12,
wherein the control means compares the password inputted by the user with the password stored in the first storage means, and stops the operation of the first electronic apparatus when the passwords do not coincide with each other.

14. The electronic apparatus for a security system as claimed in Claim 12,
wherein the control means compares the password inputted by the user a predetermined number of times of more than two with the password stored in the first storage means, and stops the operation of the first electronic apparatus when the passwords do not coincide with each other.

15. The electronic apparatus for a security system as claimed in any one of Claims 12 to 14,
wherein the first electronic apparatus further comprises third storage means for previously storing a special password other than the password, and
wherein the control means compares the inputted password with the special password stored in the third storage means, and starts the operation of the first electronic apparatus when the passwords coincide with each other.

16. The electronic apparatus for a security system as claimed in any one of Claims 10 to 15,
wherein the first electronic apparatus further comprises:
first detecting means for detecting whether or not the second electronic apparatus is connected to the first electronic apparatus via the apparatus control line; and
second detecting means for detecting whether or not the second electronic apparatus has the security function using a control signal of the apparatus control line when the first detecting means detects that the second electronic apparatus is connected to the first electronic apparatus, and
wherein the control means executes the processings of the first detecting means and the second detecting means during activation of the first electronic apparatus.

17. The electronic apparatus for a security system as claimed in Claim 16,
wherein the control means stops the processing of the security function, and starts an ordinary operation of the first electronic apparatus when the first detecting means detects that the second electronic apparatus is not connected to the first electronic apparatus.

18. The electronic apparatus for a security system as claimed in Claim 17,
wherein the control means stops the processing of the security function, and starts the ordinary operation of the first electronic apparatus when the second detecting means detects that the second electronic apparatus does not have the security function.
